# EUROPEAN PATENT APPLICATION

(11) **EP 1 063 041 A2**
(43) Date of publication of application: **27.12.2000**
(21) Application number: 00113473.3
(22) Date of filing: 26.06.2000
(51) Int. Cl.: B23D 3/02, B23B 13/04

(54) **Tool system for metal-cutting machining of sheetlike work-pieces**

(30) Priority: 26.06.1999 DE 29911152 U
(71) Applicant: Mate Precision Tooling Inc., Ramsey, Minnesota 55303 (US)
(72) Inventor: Schneider, Albrecht, 61440 Oberursel (DE)
(74) Representative: Erb, Henning, Dipl.-Ing.

(57) **Abstract**

The invention relates to a tool system for metal-cutting machining of sheetlike workpieces (12). The forming of a notch in the surface of the workpiece is often advantages in order to facilitate the banding of the metal sheet along the line of the notch. In order to avoid time consuming changeover operations cause by the use of for instance a planing machine it is proposed that a cutting tool (20, 24) is disposed in at least one tool holder (14) of a turret-type stamping or punching machine which has drive means (56), with the aid of which the work piece (12) is moveable in its extension plane, which cutting tool is adjustable, perpendicular to the extension pane of the workpiece (12) to a certain machining position with the aid of feed means (38).

## Description

The invention relates to a tool system for metal- cutting machining of sheetlike workpieces.

In machining metal sheets, for instance, it is highly advantageous to make a notch in the surface of the workpiece along a line along which the metal sheet is bent in a later machining operation. A V-shaped notch, for instance, assures a precise bending edge and low machining forces, which for instance also make it possible to bend the metal sheet up at a right angle, and also prevents material from being squeezed at the inner edge.

In principle, it is conceivable to machine a sheetlike workpiece, in particular a metal sheet, with the aid of a planing machine in order to make a V-shaped notch. However, this necessitates a time-consuming changeover operation, and it is also necessary for a planing machine, which is not conventional in sheet-metal machining, to be integrated into the course of production.

The object of the invention is to create a tool system for metal-cutting machining of a sheetlike workpieces that can be better integrated into the course of production of sheet-metal parts.

According to the invention, the object is attained in that a cutting tool is disposed which is adjustable, perpendicular to the extension plane of the workpiece, to a certain machining position with the aid of feed means is disposed in at least one tool holder of a turret-type stamping or punching machine, which has drive means with the aid of which the workpiece is movable in its extension plane.

The tool system of the invention makes use of the capability of turret-type stamping or punching machines of being able to orient the workpiece relative to the tools. If the mode of operation of the turret-type stamping machine is then altered such that the workpiece is not - as in a stamping operation - first brought into a certain position and the stamping operation is then performed, but if instead the cutting tool is first brought into its cutting position at its bottom dead center by lowering of the stamping die, and the workpiece is then moved in the direction of the V-shaped notch to be made, then metal-cutting production of V-shaped notches, or notches of other cross-sections, can be done on a turret-type stamping machine. It is recommended that the cutting tool first be lowered laterally of the workpiece or into a stamping already made, in order to avoid damage to the workpiece and/or to the cutting tool in the lowering operation.

The primary advantage of the tool system of the invention is that a notch can be made, in the surface of a metal sheet or the like, by metal-cutting machining on a conventional turret-type stamping machine without a changeover operation, so that the production time for a metal sheet that has to be stamped anyway is lengthened only insignificantly by the making of the V-shaped notch. The production costs are correspondingly also quite low.

In a preferred refinement of the invention, depending on the metal-cutting depth sought, at least two cutting tools are disposed in a tool holder, located successively in different feeding positions in the metal-cutting direction.

With the aid of this embodiment, even notches of relatively great depth can be made on a turret-type stamping machine, since because of the fixedly set bottom dead center position between successive machining operations, a feeding motion of the tool is not possible, and with a single cutting tool only a limited amount of material can be removed. Because a number of metal-cutting operations corresponding to the number of cutting tools is performed in one traveling motion of the workpiece, the machining time is also shortened, compared to a machine tool in which the cutting tool is fed by a certain distance after each metal-cutting operation of the cutting tool.

In a further preferred embodiment of the invention, the metal-cutting volume of the various cutting toots is approximately the same.

In this way it is assured that individual cutting toots cannot put especially great stresses on the workpiece, and that the combined cutting tools are not subject to severe wear to different extents but instead all wear down uniformly.

This can be achieved for instance by providing that the feed difference between successive cutting tools decreases as the feeding depth increases. For the production of V-shaped notches, for instance, this provision is well suited to assuring an approximately equal metal-cutting volume of the various cutting tools; as the formation of the notch progresses, the length of the cutting edge of the cutting tool increases. On the other hand, when a U-shaped groove, for instance, is made in the workpiece, work can also be done with constant feed differences, since the cutting edge length of all the cutting tools in this case is constant.

In order to bring the cutting tools to their machining position - including relative to one another - it is preferably also provided that for feeding at least one cutting tool, a feed screw is provided which is received in a threaded bore disposed in the feed direction. With the aid of the feed screws, fast and exact orientation of the cutting tools is attainable, and even corrections can be made more easily than in the case of cutting tools oriented with the aid of spacer pieces, for instance.

To assure a secure hold of the cutting tools in their machining position, it is preferably also provided that they can be fixed in their feeding positions with the aid of clamping means. The clamping means, each of which can for instance comprise at least one clamping screw acting on the cutting tool substantially perpendicular to the feed direction, although structurally simple in design, allow rapid tightening and loosening of the locking in all arbitrary feeding positions, as opposed to detent devices, for instance, which do not allow infinitely graduated adjustment of the cutting tools.

In a further preferred embodiment, it is provided that two clamping screws, located perpendicular to one another in a parallel to the extension plane of the workpiece, are provided for firmly clamping a cutting tool. In combination with the feed screw, the result obtained is a clearly defined location of the cutting tools, without requiring particular precision in the mounting of the cutting tool. An embodiment in which only one clamping screw, which acts on all the cutting tools, is provided in the metal-cutting direction is especially expedient. For instance, where there are a plurality of successive cutting tools, which are kept at a defined spacing from one another solely by loose metal laminas, for instance, it is thus possible for them to be fixed relative to one another in the metal-cutting direction by tightening a clamping screw. This arrangement requires only very little installation space and nevertheless makes it possible for the individual cutting tools to be firmly clamped in the tool holder in two directions perpendicular to one another.

In a further preferred embodiment of the invention, in the region of the cutting tools below the workpiece, a plane support is provided, which braces the workpiece in the feed direction. The task of the support, which in a turret-type stamping machine is pivoted jointly with the cutting tools to the machining position, resides less in the absorption of forces, as is the case in stamping tools, and instead is intended solely to assure a precisely defined orientation of the sheetlike workpiece, so that the metal-cutting machining can be done exactly at the desired machining depth.

Preferably, the workpiece, outside the support, is supported on freely rotatable balls and is movable in an arbitrary direction in the extension plane with the aid of clamping claws. In principle, recourse can then be had to the drive means of turret-type stamping machines, but then care must be taken to assure that the drive means and the clamping claw are indeed capable of bringing the requisite forces to bear for moving the workpiece; under some circumstances these forces can be somewhat greater in metal- cutting machining than in stamping.

Under some circumstances it may be expedient that at least one cutting tool, which for machining is oriented in a further metal-cutting direction, is provided in at least one further tool holder of the turret-type stamping machine. This makes it possible to make grooves in a further direction, and the drive means of a turret-type stamping machine are already suited, without further changes, to moving the workpiece in this corresponding direction of motion.

It is also conceivable for a tool holder with one or more cutting tools to be made rotatable, so that the cutting tools can be oriented to the particular metal-cutting direction desired. If this orientation is to be done by motor, however, more-comprehensive modifications of the tool holder and/or of the turret-type stamping machine may possibly be necessary.

As the cutting tool, indexable plate holders with indexable plates are preferably used, which have a long service life and permit high-speed machining operations.

An embodiment of the invention is described below in conjunction with the accompanying drawings. Shown are:
Fig. 1, a longitudinal section through a tool for metal-cutting sheet-metal machining on a turret-type stamping or punching machine;

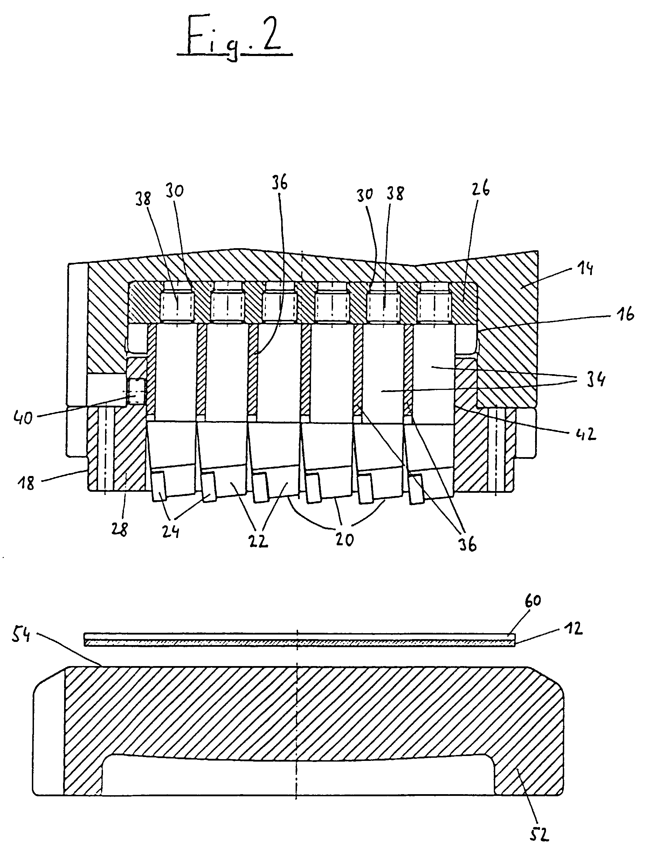

Fig. 2, a simplified, enlarged detail of Fig. 1;
Fig. 3, a section through the tool system, rotated by 90° relative to Fig. 2.

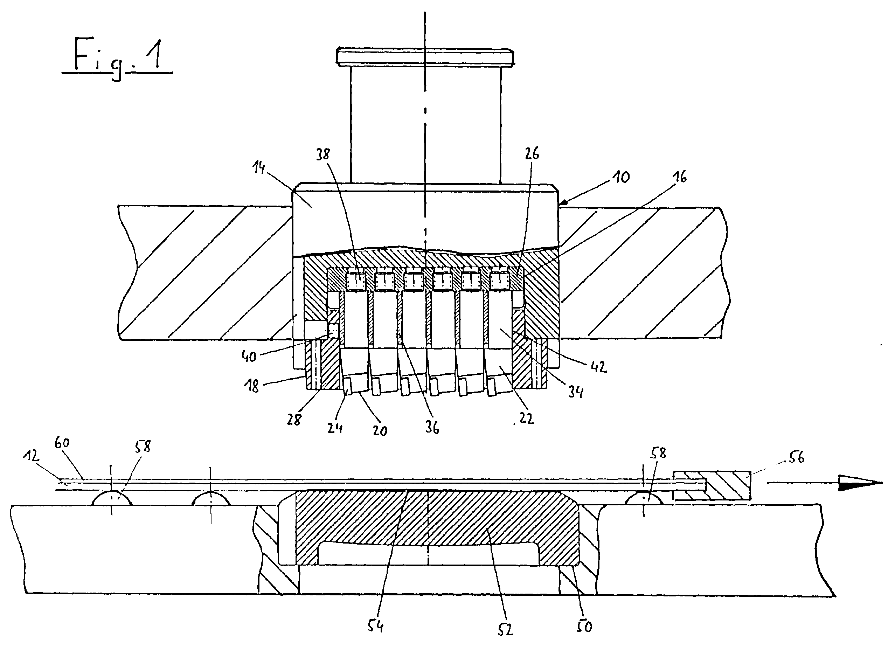

Fig. 1 shows a sectional view of a machining station 10 in a turret-type stamping or punching machine, with the aid of which a metal sheet 12 can be machined. In the machining station 10 shown, however, instead of the usual punching tools, a tool holder 14 is provided, in whose receptacle 16 a tool insert 18 with six successively located cutter inserts 20 is received. The six cutter inserts 20 are embodied substantially identically, and each comprises an indexable plate holder 22 and an indexable plate 24 secured therein. The tool insert 18 substantially comprises an upper insert part 26 and a lower insert part 28, which are screwed together, for instance. The receptacle 16 of the tool holder 14 is embodied as circular, so that the tool insert 18 can be mounted in the tool holder 14 in a position at an arbitrary rotary angle.

The upper insert part 26, in its upper region, has six threaded through bores 30, which discharge in a continuous longitudinal groove 32 that receives shafts 34 of the indexable plate holders 22. Between the individual shafts 34 of the indexable plate holders 22, spacer laminas 36 are provided, which assure a defined spacing of the cutter inserts 20 to one another.

Threaded pins 38 are disposed in the threaded through bores 30 in the upper insert part 26 and each act directly on the rearward end of a respective shaft 34 of a cutter insert 20 and thus enable its adjustment to a desired machining position. The locking of the cutter inserts 20 relative to the tool insert 18 is effected by a first clamping screw 40, which is disposed in the lower insert part 28 in such a way that the shafts 34 received in the longitudinal groove 32 and the spacer laminas 36 can be firmly clamped jointly against a stop face 42, and by second clamping screws, which are associated with the individual cutter inserts 20 and whose direction of action is rotated by 90° relative to the first clamping screw; with the aid of these second clamping screws, the indexable plate holders 22 can additionally be clamped individually against the lower insert part 28. The clamping screws 40, 42 are disposed in such a way that loosening of the cutter inserts 20 is possible even without removing the tool insert 18 from the tool holder 14, for instance so that if the indexable plates 24 are worn they can be put into a new position.

A further special feature of the machining station 10 shown is that the pressure pad 50 provided below the metal sheet 12 is provided with an insert piece 52, which is embodied not as a female die, as in the case of a punching station, but rather as a plane support that has a support face 54, which assures a precisely defined location of the metal sheet 12 perpendicular to its extension plane.

The motion of the metal sheet 12 in an arbitrary direction located in its extension plane is effected with the aid of clamping claws 56, with whose the aid requisite tension forces can be introduced into the metal sheet 12. To prevent the metal sheet 12 from warping by its own weight, the sheet is supported on many freely rotatable balls 58, whose apex is aligned with the support face 54.

To make it possible, in the course of the metal-cutting machining, with the machining station 10 shown, for instance to produce a V-shaped notch 60 in the metal sheet 12 as shown in the drawings, the tool insert 18 is first prepared for insertion into the tool holder 14. To that end, the individual cutter inserts 20 are placed in the longitudinal groove 32 and are brought to their desired feeding position by adjustment of the threaded pins 38. In this operation care must be taken that the feeding depth of the cutter inserts 20 be embodied such that it increases in the order of the arrangement of cutter inserts, that is, from left to right in terms of Fig. 1. In this way it is possible to produce a relatively deep notch 60, without the possibility of excessive stress on the metal sheet 12 or on a cutter insert 20. The difference in the feeding depth of successive cutter inserts 20 is adjusted to decrease as the feeding depth increases, in the exemplary embodiment shown, since in the case of a V-shaped notch 60, the metal-cutting volume increases progressively as the feeding depth increases. The V shape of the notch 60 is intrinsically due to the form of the indexable plates 24; in principle, it would also be possible to use indexable plates 24 of different shapes in the various cutter inserts 20, since the final form of the notch 60 is determined only by the indexable plate 24 of the rearmost cutter insert 20. In the case of notches of constant width, that is, with a substantially U-shaped cross section, for instance, the feed difference of successive cutter inserts 20 can also be constant.

Once the cutter inserts 20 have been oriented, they are clamped in the tool insert 18 by tightening of the clamping screw 40, 42, and the tool insert is inserted into the tool holder 14.

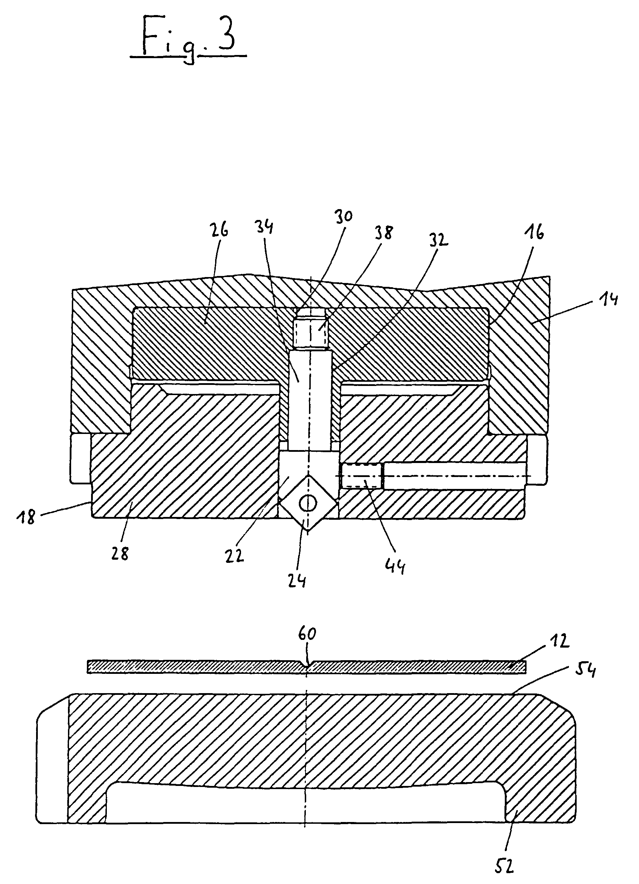

For machining the metal sheet 12, this sheet is first positioned with the aid of the clamping claw 56 in such a way that the cutter inserts 20 are located outside the metal sheet 12 or in the region of a punching that under some circumstances may have been already made in the metal sheet 12 with the aid of a further machining station of the turret- type punching machine. After that, by the die drive means of the turret-type punching machine (not shown), the tool holder 14 is moved into its bottom dead center position, in which the cutting edges of the indexable plates 24 assume their desired position. In contrast to the stamping mode, in which the tool holder 14 is immediately raised again once a stamping operation has been performed, the tool holder 14 in the machining station 10 shown remains at its bottom dead center position. Next, the metal sheet 12 is moved, with the aid of the clamping claw 56, in the alignment direction of the cutter inserts 20; the cutter inserts 20 come into engagement successively and incrementally create the V-shaped notch 60 as far as its depth shown in Fig. 3. The support face 54 prevents the metal sheet 12 from shifting.

As soon as the notch 60 has been finished, that is, once all the cutter inserts 20 are located outside the metal sheet 12 or are located in a further stamping, the tool holder 14 is raised to its location shown in Fig. 1 again. The metal-cutting operation can be followed by punching operations performed by other stations.

Making notches 60 in metal sheets 12 is especially advantageous wherever the metal sheet 12, after machining of the metal sheet 12 in a punching machine, is intended to be bent along certain lines. The notch 60 shown marks such a line precisely and allows the ensuing perpendicular bending of a region of the metal sheet while preventing squeezing of material in the region of the bending edge. The bending forces are so slight that even with relatively thick metal sheets, manual bending is still possible, and the notch 60 also considerably improves the precision of the bending operation.

Instead of the cutter inserts 20 with indexable plates 24 as shown, it is fundamentally also conceivable to use other types of cutting tools; in particular, the form of the cutting edges of the cutting tools depends on the cross- sectional shape of the groove or notch to be made. The number of cutting tools can differ from that in the exemplary embodiment shown. In principle, a machining station 10 can even function with only a single cutting tool, but in that case the attainable depth of the groove or notch to be made is limited. The size of the tool holder 14 sets limits on the number of cutting tools, so that in practice it is rarely possible to work with more than six cutter inserts 20. However, because of the limited thickness of the metal sheets 12 that can be machined on turret-type stamping machines, there is no need anyway to be able to make grooves or notches of arbitrary depth.

As already mentioned, a machining station for metal- cutting machining of metal sheets on a turret-type punching machine can be used along with conventional punching stations; it is understood, however, that still other stations can be equipped with cutting tools, for instance in order to be able to make grooves or notches in further directions in the metal sheet 12.

## Claims

1. A tool system for metal-cutting machining of sheetlike workpieces (12), characterized in that a cutting tool (20, 24) is disposed in at least one tool holder (14) of a turret-type stamping or punching machine which has drive means (56), with the aid of which the workpiece (12) is movable in its extension plane, which cutting tool is adjustable, perpendicular to the extension plane of the workpiece (12), to a certain machining position with the aid of feed means (38).

2. The tool system of claim 1, characterized in that depending on the metal-cutting depth sought, at least two cuffing tools (20, 24) are disposed in a tool holder, located successively in different feeding positions in the metal- cuffing direction.

3. The tool system of claim 2, characterized in that the metal-cutting volume of the various cutting tools (20) is approximately the same.

4. The tool system of claim 2 or 3, characterized in that the feed difference between successive cutting tools (20, 24) decreases as the feeding depth increases.

5. The tool system of one of the foregoing claims, characterized in that for feeding at least one cutting tool (20), a feed screw (38) is provided, which is received in a threaded bore (30) disposed in the feed direction.

6. The tool system of claim 5, characterized in that the cutting tools (20) can be fixed in their feeding positions with the aid of clamping means (36, 40, 44).

7. The tool system of claim 6, characterized in that the clamping means comprise at least one clamping screw (40, 44) acting on the cutting tool (20) substantially perpendicular to the feed direction.

8. The tool system of claim 7, characterized in that two clamping screws (40, 44), located perpendicular to one another in a parallel to the extension plane of the workpiece (12) are provided for firmly clamping the cutting tools (20).

9. The tool system of claim 8, characterized in that in the metal-cutting direction, only one clamping screw (40) is provided, which acts on all the cutting tools (20).

10. The tool system of claim 9, characterized in that spacer laminas (36) are provided between the cutting tools (20).

11. The tool system of one of the foregoing claims, characterized in that in the region of the cutting tools (20, 24) below the workpiece (12), a plane support (52, 54) is provided, which braces the workpiece (12) in the feed direction.

12. The tool system of claim 11, characterized in that the workpiece (12), outside the support (54), is supported on freely rotatable balls (58) and is movable in the extension plane with the aid of clamping claws (56).

13. The tool system of one of the foregoing claims, characterized in that in at least one further tool holder of the turret-type stamping machine, at least one cutting tool is provided, which for machining is oriented in a further metal-cutting direction.

14. The tool system of one of the foregoing claims, characterized in that a tool holder (14) with one or more cutting tools (20) is embodied rotatably, or an insert (18) seated in the holder (14) is embodied as rotatable relative to the tool holder (14).

15. The tool system of one of the foregoing claims, characterized in that the cutting tools are embodied as cutter inserts (20) with indexable plate holders (22) and indexable plates (24).
